# EUROPEAN PATENT SPECIFICATION

(11) **EP 3 490 362 B1**
(45) Date of publication and mention of the grant of the patent: **04.11.2020**
(21) Application number: 17851905.4
(22) Date of filing: 28.07.2017
(51) Int. Cl.: A01C 5/06

(54) **ANGLE SETTING MECHANISM IN DISC TYPE FURROW OPENERS**
WINKELEINSTELLMECHANISMUS IN SCHEIBENARTIGEN SCHAREN
MÉCANISME DE RÉGLAGE D'ANGLE DANS DES SILLONNEURS DE TYPE DISQUES

(30) Priority: 29.07.2016 TR 201610618
(43) Date of publication of application: 05.06.2019
(73) Proprietor: Atatürk Üniversitesi Bilimsel Arastirma Projeleri Birimi, Merkez Erzurum (TR); Celik, Ahmet, Merkez Erzurum (TR)
(72) Inventor: CELIK, Ahmet, Merkez Erzurum (TR)
(74) Representative: Yamankaradeniz, Kemal
(86) International application number: PCT/TR2017/050358
(87) International publication number: WO 2018/067087

(56) References cited:
- EP-A1- 0 891 691
- GB-A- 190 912 928
- US-A- 3 718 191
- US-A- 4 596 199

## Description

### Technical Field

The invention relates to an angle setting mechanism that enables the disc type furrow openers, which are commonly used in direct seeding/drilling machines, to be used by being set according to the desired disc and tilt angle values for different crop, soil and field conditions.

### Prior Art

Furrow openers that are used in sowing machines form a bedding by opening furrows on soil for the seeds to be put into. The loosened soil that is extracted from these furrows formed by openers that are generally designed as disc types, is transferred again into the furrow by closers in order to cover the top of the seed that is put into the furrow. Especially in direct planting/drilling, the smearing effect caused by the discs used in certain angle values and the soil coming out of the opened furrows are not sufficient enough to cover the seed. Therefore, in some cases the seeds remain uncovered and cannot germinate.

In the present day, double disc type furrow openers are commonly used in sowing machines for row crops (corn, sunflower, soy bean, cotton vb.). In addition, the angle setting range between the discs of the furrow openers of this type is very limited or they may merely be used with a fixed angle value that is set in the manufacturing process. The obligation of the openers to be used in a fixed tilt and disc angles as this causes the opening of inappropriate furrows and a higher draft resistance due to different soil and field conditions.

The patent no. GB 12928 A A.D 1909 discloses an agricultural machine known as a disc drill scarifier having two discs. In this machine scarifying discs have been placed in a vertical position and the discs should be set an angle so as to present a bevel in their working position. Further it discloses that compensating means are also provided to facilitate the raising and lowering, or adjusting, of the discs.

The patent application no. US 3 718 191 A discloses a clearer wheel adjustment mechanism. Said mechanism adjusts the tilt angle of a plate.

The patent application no. US 4 569 199 A discloses a single disc sealer for closing the groove formed by a fertilizer knife. The disc sealer has an axis extending downwardly 30° and forwardly of a line transverse of the direction of travel approximately 10°-15°. The patent application EP 0 891 691 A1 discloses the preamble of the invention.

Consequently, especially in direct sowing machines, the presence of the need for furrow openers with angle settings which enable the usage of the machine with the desired disc and tilt angle values depending on the different crop, soil and field conditions and the inadequacy of the existing solutions created a requirement for a development in the field.

### Purpose of the Invention

The present invention is related to an angle setting mechanism for disc type furrow openers which fulfills the above mentioned needs, eliminates all the disadvantages and brings some extra advantages.

The main aim of the angle setting mechanism of the invention is to enable setting the tilt and disc angles of the disc and the flange couple, which are located between the disc type furrow opener and the mechanism body and/or between the mechanism body and the sowing machine in the desired values. Therefore, the invention, unlike the fixed values that the soil tillage equipment especially such as the disc type furrow openers or disc plough or disc harrow are set to during the manufacturing process, enables the practical setting opportunity for the use with the optimum tilt and disc angles required by different crop, field and soil conditions. Therefore, the furrow opener may be used indifferent crop, field and soil conditions by a simple angle setting and since this eliminates the need for separate sowing machines for these circumstances, it consequently decreases the investment cost in a great manner.

Another aim of the invention is to enable the direct detection of the angle value by virtue of the reference point that is formed upon at least one of the flange couple and the ruler that is located on the another flange couple. By this way, an extra measurement is not needed when the angle setting is being performed and the real value may be observed immediately.

In order to fulfill the above mentioned aims in the most general manner, a disc type furrow opener angle setting mechanism is proposed according to claim 1. Further embodiments are defined in the depending claims.

The structural and characteristic features all advantages of the invention shall be clearly understood by the figures provided below and detailed description written with references to these figures, therefore the evaluation shall be made by taking these figures and detailed description into account.

### Figures for Better Understanding of the Invention

The structural and characteristic features of the invention along with the extra elements shall be clearly understood by the figures provided and described below, therefore the evaluation shall be made by taking these figures and detailed description into account.
- Figure 1: is the side view of the preferred configuration of the furrow opener angle setting mechanism according to the invention.
- Figure 2: is the view of the flange couple (moving flange and fixed flange) included in the furrow opener angle setting mechanism in a demounted status.
- Figure 3: is the view of the flange couple included in the furrow opener angle setting mechanism in a status of mounted to each other.
- Figure 4.a: is the front view of the disc included in the furrow opener angle setting mechanism in a certain tilt angle.

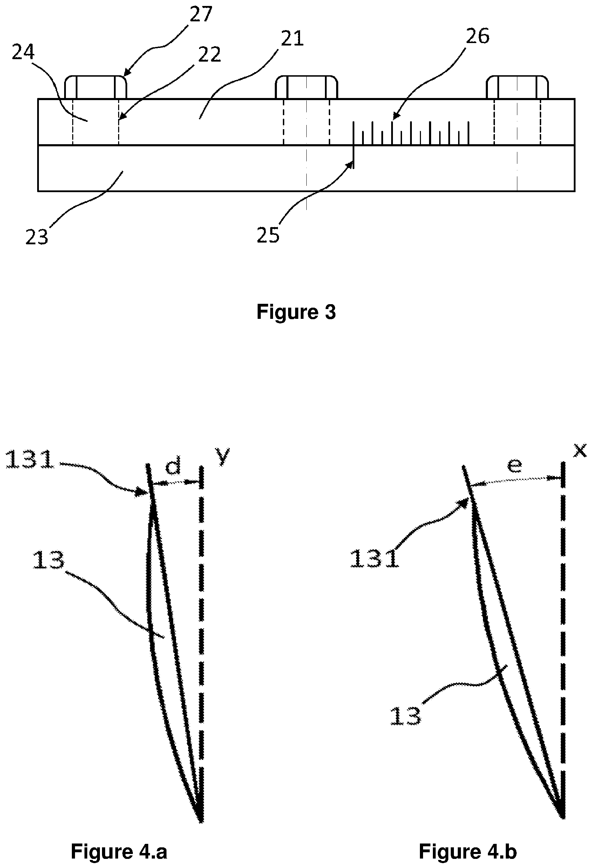

- Figure 4.b: is the top view of the disc included in the furrow opener angle setting mechanism in a certain tilt angle.

The drawings do not always have to be scaled and the details that are not required for the invention to be understood may be disregarded. Over and above this, the elements that are identical at least in majority or that have functions that are identical in majority are represented with the same number.

### Description of Part References

| | | | |
|---|---|---|---|
| 10 | Furrow opener angle setting mechanism | 26 | Angle setting meter |
| | | 27 | Fixing element |
| 11 | Mechanism body | 30 | Sowing machine |
| 12 | Disc connection strut | a | Pin socket positioning angle |
| 13 | Disc | b | Pin positioning angle |
| 131 | Disc plane | c | Pin transcursion length angle |
| 20 | Flange couple | d | Tilt angle |
| 21 | Moving flange | e | Disc angle |
| 22 | Pin socket | y | Vertical axis |
| 23 | Fixed flange | x | Movement direction |
| 24 | Pin | | |
| 25 | Angle meter reference point | | |

### Detailed Description of the invention

In this detailed description, the preferred embodiments of the invention are described for the mere aim of the subject being more clearly understood and in a manner that no limiting effect shall occur.

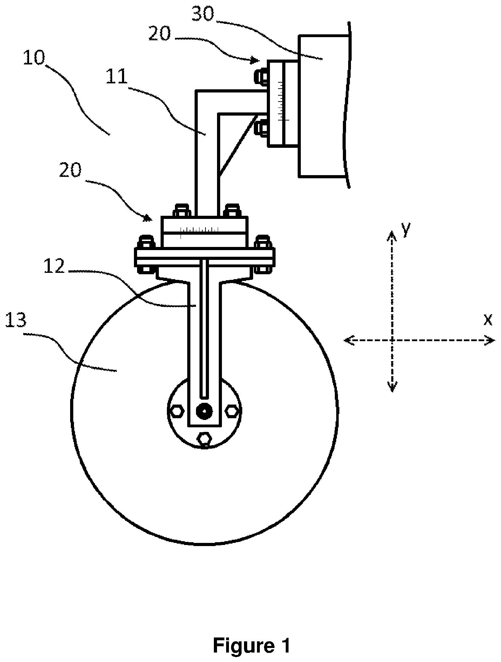

Disc type furrow opener angle setting mechanism (10) of which the side view is provided in Figure 1 includes a mechanism body (11) that is connected to the sowing machine (30), disc (13) and the disc connection strut (12) which enables the disc connection. The distinctive feature of the furrow opener angle setting mechanism (10) according to the invention as compared to prior art is that the disc (13) may be positioned as with the desired disc angle (e) and/or tilt angle (d) for different crop, soil and field circumstances. Flange couple (20), which are designed for this purpose, are located between the disc connection strut (12) and mechanism body (11) and/or between the mechanism body (11) and sowing machine (30) in order to provide the connection to each other. On the other hand, as in the general manner, flange couple (20) is composed of a fixed flange (23) on which there is included at least one pin (24), a moving flange (21) on which at least one pin socket (22), through which the pin (24) may move bidirectional and is located in a manner that the fixed flange (23) may perform a turning movement on it and at least one fixing element (27) which fixes the positions of the fixed flange (23) and the moving flange (21) according to each other.

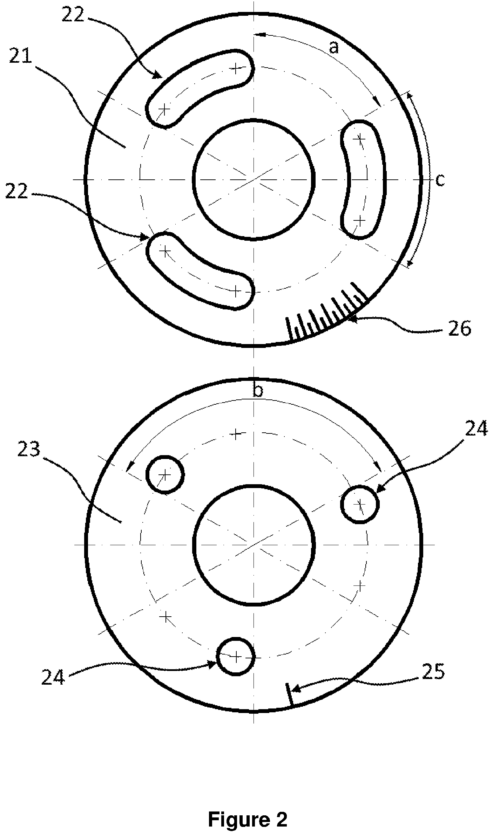

According to the invention of the flange couple (20) of which the demounted view is provided in Figure 2, there is a fixed flange (23) onto which three pins (24) are located with a 120 degree positioning angle (b) to one another. On the other hand, three pin sockets (22) are located on the moving flange (21) with a 60 degrees of pin socket positioning angle (a) to one another and of which the pin transcursion length angle (c)is 60 degrees. According to the invention pins (24) may insert into the pin socket (22) and may perform a circular movement to an extent of 60 degrees. The circular movement may be inhibited by the virtue of the fixing element (27) that fixes the locations of the fixed flange (23) and the moving flange (21) to each other. In the preferred embodiment of the invention, the pin (24) that is formed upon the fixed flange (23) has a form of a bolt which has threaded tip and the fixing element (27) has the form of a nut. In other words, after the moving flange (21) is positioned as desired on the fixed flange (23), moving flange (21) is made to hold onto the fixed flanges (23) with pressure force by tightening the fixing element (27) which has nut shape.

In the preferred embodiment of the invention, similar to the view of the mounted flange couple (20) as it is shown in Figure 3, there exist an angle meter reference point (25) which is formed on either the fixed flange (23) or moving flange (21) and an angle setting meter (26) which is formed on either the fixed flange (23) or the moving flange (21). Angle setting meter (26) that is set in certain angle ranges shows the angle value obtained by turning the moving flange (21) on the fixed flange (23).

According to the invention the flange couple (20) which provides the connection between the mechanism body (11) and the sowing machine (30) is in a position parallel to the vertical axis (y) and perpendicular to the movement direction (x). On the other hand, the flange couple (20) which provides the connection between the mechanism body (11) and the disc connection strut (12) is in a position perpendicular to the vertical axis (y) and parallel to the movement direction (x). In this embodiment, the flange (23) which is connected in a fixed manner to the sowing machine (30) and the moving flange (21) that is also connected are positioned side by side or on top each other. In the mounting of the mechanism, after the pins (24) are inserted into the pin sockets (22), the desired angle value is set by turning the moving flange (21) on the fixed flange (23). In this process, the angle value obtained by the help of the angle meter reference point (25) and angle setting meter (26) may be directly observed. Upon the completion of the angle setting process, the fixing element (27) is tightened in order to make the moving flange (21) remain motionless on the fixed flange (23).

The angle obtained by the flange couple (20) that is parallel to the vertical axis (y) and perpendicular to the movement direction (x) directly affects the tilt angle (d)of the disc (13). In Figure 4.a. the front view of the disc (13) which is a functional part upon the disc connection strut (12) is given in a certain tilt angle (d). The angle that the disc plane (131) makes with the vertical axis (y) gives the tilt angle (d). The angle of the flange couple (20) which is parallel to the vertical axis (y) and perpendicular to the movement direction (x) is equal to the value the angle setting meter (26) shows.

The angle obtained by the flange couple (20) that is perpendicular to the vertical axis (y) and parallel to the movement direction (x) directly affects the disc angle (e)of the disc opener (13).In Figure 4.b. the top view of the disc (13) which is a functional part upon the disc connection strut (12) is given in a certain disc angle (e). The angle that the disc plane (131) makes with the movement direction (x) gives the disc angle (e). The angle of the flange couple (20) which is perpendicular to the vertical axis (y) and parallel to the movement direction (x) is equal to the value the angle setting meter (26) shows.

In this manner by the virtue of the flange couple (20), the desired tilt angle (d) and the disc angle (e)is set and the disc type furrow opener (13) or a disc type soil tillage equipment is adapted to the different tillage and seeding circumstances. In case the tilt angle (d) and/or disc angle(e) is desired to be altered, the moving flange (21) is turned by easily loosening the fixing element (27) in the respective flange couple (20) and the desired value is set by the virtue of the angle setting meter (26) and the fixing element (27) is tightened again. Thus, sowing process becomes possible under different soil and field conditions with only one sowing machine (30). The invention enables the use of soil cultivation equipment such as disc type furrow opener (13), disc harrow and disc plough by providing a setting for different disc angles (e) and tilt angles (d) depending on the various conditions.

## Claims

1. A disc type furrow opener angle setting mechanism (10) comprises a mechanism body (11) connected to a sowing machine (30), a furrow opener disc, a disc connection strut (12) connected to the mechanism body (11) and the furrow opener disc; and enables the disc (13) take a position according to a desired disc angle (e) and/or tilt angle (d) for different crop, soil and field circumstances and the furrow opener angle setting mechanism (10) comprising;
- In order to adjust the disc angle of the furrow disc, at least one flange couple (20) located between the disc connection strut (12) and the mechanism body (11) and is in a position parallel to the vertical axis (y) and perpendicular to the movement direction (x) and
- In order to adjust the tilt angle of the furrow disc, at least one further flange couple (20) located between the mechanism body (11) and the sowing machine (30) and is in a position perpendicular to the vertical axis (y) and parallel to the movement direction (x)
wherein the flange couples (20) comprise;
• a fixed flange (23) on which at least one pin (24) is found,
• a moving flange (21) located in a manner to be able to perform a turning move on the fixed flange (23) and on which at least one pin socket (22) is formed through which the said pin (24) passes and moves bidirectional,
• at least one fixing element (27) fixes the positions of the fixed flange (23) and moving flange (21) according to each other;
**characterized in that**
three pins (24) are located on the fixed flange (23) with a 120 degree positioning angle (b) to one another, and
three pin sockets (22) are located with a 60 degrees of pin socket positioning angle (a) to one another and the pin transcursion length angle (c) is 60 degrees on the moving flange (21).

2. The disc type furrow opener angle setting mechanism (10) according to the claim 1, **characterized by** comprising;
- the at least one pin (24) located on the fixed flange (23) and in the shape of a screw which has a threaded tip,
- the at least one fixing element (27) in the form of a nut that provides the moving flange to apply a pressure force to the fixed flange (23) by being intertwined into the bolt shaped pin (24).

3. The disc type furrow opener angle setting mechanism (10) according to the claim 1, **characterized by** comprising;
- at least one angle meter reference point (25) formed on either the fixed flange (23) or moving flange (21),
- at least one angle setting meter (26) formed on either the fixed flange (23) or the moving flange (21).

## Patentansprüche

1. Scheibenformfurchenöffnerwinkeleinstellmechanismus (10), umfassend einen Mechanismuskörper (11), der mit einer Sämaschine (30) verbunden ist, eine Furchenöffnerscheibe, eine Scheibenverbindungsstrebe (12), die mit dem Mechanismuskörper (11) und der Furchenöffnerscheibe verbunden ist; und ermöglichend, dass die Scheibe (13) eine Position gemäß einem gewünschten Scheibenwinkel (e) und/oder Neigungswinkel (d) für verschiedene Ernte-, Boden- und Feldbedingungen einnimmt und wobei der Furchenöffnerwinkeleinstellmechanismus (10) Folgendes umfasst:
- um den Scheibenwinkel der Furchenscheibe einzustellen, befindet sich mindestens ein Flanschpaar (20) zwischen der Scheibenverbindungsstrebe (12) und dem Mechanismuskörper (11) und befindet sich in einer Position parallel zu der vertikalen Achse (y) und senkrecht zu der Bewegungsrichtung (x), und
- um den Neigungswinkel der Furchenscheibe einzustellen, befindet sich mindestens ein weiteres Flanschpaar (20) zwischen dem Mechanismuskörper (11) und der Sämaschine (30) und befindet sich in einer Position senkrecht zu der vertikalen Achse (y) und parallel zu der Bewegungsrichtung (x),
wobei die Flanschpaare (20) Folgendes umfassen:
• einen festen Flansch (23), an dem sich mindestens ein Stift (24) befindet,
• einen beweglichen Flansch (21), der so angeordnet ist, dass er eine Drehbewegung an dem festen Flansch (23) durchführen kann und an dem mindestens eine Stiftbuchse (22) gebildet ist, durch die der Stift (24) verläuft und sich bidirektional bewegt,
• mindestens ein Befestigungselement (27), das die Positionen des festen Flansches (23) und des beweglichen Flansches (21) zueinander fixiert;
**dadurch gekennzeichnet, dass**
sich drei Stifte (24) mit einem Positionierungswinkel von 120 Grad (b) zueinander an dem festen Flansch (23) befinden und sich drei Stiftbuchsen (22) mit einem Buchsenpositionierungswinkel von 60 Grad (a) zueinander befinden und der Stiftübergangslängenwinkel (c) 60 Grad an dem beweglichen Flansch (21) beträgt.

2. Scheibenformfurchenöffnerwinkeleinstellmechanismus (10) nach Anspruch 1, **dadurch gekennzeichnet, dass** er Folgendes umfasst:
- den mindestens einen Stift (24), der sich an dem festen Flansch (23) befindet und in der Form einer Schraube ist, die eine Gewindespitze aufweist,
- das mindestens eine Befestigungselement (27) in der Form einer Mutter, das den beweglichen Flansch bereitstellt, um eine Druckkraft auf den festen Flansch (23) auszuüben, indem er in den bolzenförmigen Stift (24) verflochten wird.

3. Scheibenformfurchenöffnerwinkeleinstellmechanismus (10) nach Anspruch 1, **dadurch gekennzeichnet, dass** er Folgendes umfasst:
- mindestens einen Winkelmessreferenzpunkt (25), der an einem von dem festen Flansch (23) oder dem beweglichen Flansch (21) gebildet ist,
- mindestens einen Winkeleinstellmesser (26), der an einem von dem festen Flansch (23) oder dem beweglichen Flansch (21) gebildet ist.

## Revendications

1. Mécanisme de réglage d'angle de sillonneur de type disque (10) comprend un corps de mécanisme (11) relié à un semoir (30), un disque de sillonneur, une entretoise de liaison (12) de disque reliée au corps de mécanisme (11) et au disque de sillonneur ; et permet au disque (13) de prendre une position selon un angle de disque souhaité (e) et/ou un angle d'inclinaison (d) pour différentes conditions de culture, de sol et de champ et le mécanisme de réglage d'angle de sillonneur (10) comprenant ;
- afin de régler l'angle de disque du disque de sillon, au moins une paire de brides (20) situées entre l'entretoise de liaison (12) de disque et le corps de mécanisme (11) et est dans une position parallèle à l'axe vertical (y) et perpendiculaire à la direction de déplacement (x) et
- afin de régler l'angle d'inclinaison du disque de sillon, au moins une autre paire de brides (20) situées entre le corps de mécanisme (11) et le semoir (30) et est dans une position perpendiculaire à l'axe vertical (y) et parallèle à la direction de déplacement (x),
lesdites paires de brides (20) comprenant ;
• une bride fixe (23) sur laquelle se trouve au moins une broche (24),
• une bride mobile (21) située de manière à pouvoir effectuer un mouvement de rotation sur la bride fixe (23) et sur laquelle est formée au moins une douille de broche (22) à travers laquelle ladite broche (24) passe et se déplace de manière bidirectionnelle,
• au moins un élément de fixation (27) fixant les positions de la bride fixe (23) et de la bride mobile (21) l'une par rapport à l'autre ;
**caractérisé en ce que** trois broches (24) sont situées sur la bride fixe (23) avec un angle de positionnement de 120 degrés (b) l'une par rapport à l'autre, et trois douilles de broches (22) sont situées avec un angle de positionnement de douille de broche qui est de 60 degrés (a) l'une par rapport à l'autre et l'angle de longueur de course de broche (c) est de 60 degrés sur la bride mobile (21).

2. Mécanisme de réglage d'angle de sillonneur de type disque (10) selon la revendication 1, caractérisé en comprenant ;
- la au moins une broche (24) située sur la bride fixe (23) et en forme de vis qui possède une pointe filetée,
- le au moins un élément de fixation (27) sous la forme d'un écrou qui fournit la bride mobile pour appliquer une force de pression sur la bride fixe (23) en étant entrelacée dans la broche en forme de boulon (24).

3. Mécanisme de réglage d'angle de sillonneur de type disque (10) selon la revendication 1, caractérisé en comprenant ;
- au moins un point de référence d'indicateur d'angle (25) formé soit sur la bride fixe (23) soit sur la bride mobile (21),
- au moins un indicateur de réglage d'angle (26) formé sur la bride fixe (23) ou sur la bride mobile (21).
